# EUROPEAN PATENT SPECIFICATION

(11) **EP 1 008 309 B1**
(45) Date of publication and mention of the grant of the patent: **12.03.2003**
(21) Application number: 98204169.1
(22) Date of filing: 10.12.1998
(51) Int. Cl.: A23P 1/02, A21D 6/00, A21D 10/00

(54) **Granular baking improver product**
Körnige Backhilfe
Améliorant de boulangerie sous forme granulaire

(43) Date of publication of application: 14.06.2000
(73) Proprietor: Zeelandia Jung GmbH & Co. KG, 60437 Frankfurt (DE)
(72) Inventor: Haefliger, Hanspeter, 8400 Winterthur (CH); Berg, Udo, 61184 Karben (DE); Germeroth, Hans-Wilhelm, 61118 Bad Vilbel (DE); Schuster, Volkmar, 61350 Bad Homburg (DE); Kehrli, Peter, 8404 Winterthur (CH)
(74) Representative: Rupp, Christian, Dipl.-Phys.

(56) References cited:
- WO-A-96/03893
- DE-A- 4 344 107
- DE-A- 19 708 165
- GB-A- 1 168 692
- US-A- 3 135 612

## Description

The present invention relates to a granular baking improver product and to a process for the production of a granular baking improver product.

Bread baking improvers are used for the dough preparation in bakeries, in order to better control the baking properties of the flour, and to regulate enzyme activity. Bread baking improvers traditionally contain emulsifiers and malt components, generally in powder form. Although the emulsifiers are diluted with flours, the powder may lump or even block in the bag, especially by increasing temperature. In addition, very fine powder particles below about 50 µm are considered as dust which can cause allergies like the typical baker-asthma (occupational asthma).

EP0650669 (GIST-BROCADES) discloses a baking improver composition in a homogeneous solid shaped form comprising one or more baking improver agent and a binding agent which permits disintegration of the solid form when in use for mixing a dough. The solid shaped form may be capable of manual division into smaller dosage units and may be obtained by compacting a powder composition based on flour and containing about 20 to 30% by weight of lecithin as a binding agent and baking emusifier, for example.

WO9501727 (QUEST INTERNATIONAL) discloses enzymes which are in a particulate, non-dusting form and which are substantially non-allergenic. The particles comprise a binding agent which is substantially insoluble in water, especially a binding agent consisting of at least 50% of an emulsifier, the enzymes being dispersed therein and being released upon the application of shear forces, especially during kneading or extruding a food mixture, for example.

The particles may be obtained by spray chilling a liquid mixture of enzyme solution and molten emulsifier.

DE19708165 (HENKEL) discloses a process for manufacturing a granular baking aid by extrusion, which consists of simultaneously mixing and extruding practically anhydrous baking aid constituents, in order to avoid adding water at the beginning and drying in the end of the manufacturing process.

A first object of the present invention is to provide a granular baking improver product which is not dusting, which is free flowing, which offers resistance to compactation and which is easy to be broken after compactation.

A second object of the present invention is to provide a process for the production of a granular baking improver product which permits the use of liquid malt and liquid emulsifier for granulating and/or agglomerating powdered constituents of the baking improver.

It has now been found that the first object of the present invention can be met by a granular baking improver product, which has a mean particle diameter of from 300 to 500 µm, less than 1% by volume of the particles having a diameter smaller than 50 µm, which comprises, in % by weight, from 8 to 20% of malt extract and/or high melting fat, from 8 to 20% of emulsifier, from 15 to 25% of stabiliser, from 45 to 69% of filler, up to 4% of enzyme mix, up to 5% of acid and up to 0.5% of oxidising agent, and which has a moisture content of from 4 to 6%.

It has been found that the second object of the present invention can be met by a process for the production of a granular baking improver product which consists of preparing a premix of powdered constituents comprising, in % by total weight of premix plus liquids, from 15 to 25% of stabiliser, from 45 to 69% of filler, up to 4% of enzyme mix, up to 0.5% of acid and up to 0.5% of oxidising agent, and forming the premix into granules or agglomerates by continuously dispersing liquids comprising from 8 to 20% of liquid malt extract and/or high melting fat, from 8 to 20% of liquid emulsifier and up to 5% lactic acid into a flow of the premix.

The outstanding properties of the present granular baking improver product, in so far as it is not dusting, it is free flowing, it offers resistance to compactation and it is easy to be broken after compactation, may be checked and defined by means of particle size analysis, compactation test and compression strength test as described later on, for example.

Furthermore it was found that the present granular baking improver product may disintegrate so fast in a dough kneading process that there is no difference as compared with a traditional powdered product in this respect.

In addition, the fact that liquid malt and liquid emulsifier may be used in the present process for the production of a granular baking improver product indeed appears to be advantageous both with regard to appreciable cost savings regarding the raw material to be used and with respect to the outstanding properties of the granular product thus obtained.

A further advantage of the present process is that it may not be necessary to postdry the present product after it has been formed into granules or agglomerates.

Thus, the present granular baking improver product has a mean particle diameter of from 300 to 500 µm, less than 1% by volume of the particles having a diameter smaller than 50 µm.

Preferably, at least 90% by volume of the particles have a diameter of 100 µm or more and the particles have a span in diameter distribution of from 1.5 to 2.5.

The span is defined as the broadness or width in particle distribution between a 10% limit and a 90% limit divided by the mean particle diameter, whereby 10% by volume of the particles have a diameter below the 10% limit and 90% by volume of the particles have a diameter below the 90% limit.

The present granular baking improver product comprises, in % by weight, from 8 to 20% of malt extract and/or high melting fat, from 8 to 20% of emulsifier, from 15 to 25% of stabiliser, from 45 to 69% of filler, up to 4% of enzyme mix, up to 5% of acid and up to 0.5% of oxidising agent.

The expression "high melting fat" means a fat having a melting temperature above ambient temperature.

The high melting fat preferably has a melting temperature of from 45 to 60°C and it may be a vegetable fat such as palm fat, for example.

The emulsifier may be a lecithin, a mono- or diglyceride of fatty acid, a calciumstearoyllactylate, a sodium stearoyllactylate, a polysorbate and/or a datem (mono- and diacetyl tartaric acid ester used for bakery products), for example.

The stabiliser may be guar gum, xanthan, locust bean gum, carboxymethylcellulose, alginate, pregelatinised flour, especially pregelatinised wheat or corn flour, and/or acidic calcium pyrophosphate, for example.

The filler may be sugars such as sucrose, dextrose or lactose, maltodextrin, wheat flour, malt flour, buttermilk powder, wheat gluten, starch (potato, wheat, corn), calciumsulfate, calciumcarbonate, tricalciumphosphate and/or soya flour, for example.

The enzyme mix may comprise any food grade amylase, hemicellulase, lipase and/or protease, for example.

The acid may be citric acid, lactic acid, acetic acid or tartaric acid, for example.

The oxidising agent may be ascorbic acid, L-cystein or cystine, for example.

As stated above, the present process for the production of a granular baking improver product consists of preparing a premix of powdered constituents comprising, in % by total weight of premix plus liquids, from 15 to 25% of stabiliser, from 45 to 69% of filler, up to 4% of enzyme mix, up to 0.5% of acid and up to 0.5% of oxidising agent, and forming the premix into granules or agglomerates by continuously dispersing liquids comprising from 8 to 20% of liquid malt extract and/or high melting fat, from 8 to 20% of liquid emulsifier and up to 5% lactic acid into a flow of the premix.

In addition to what has been said above as to what the different constituents may be or preferably are, it may be stated here that the powdered filler also may comprise a part of malt in dried form, for example.

The liquid malt extract may have a moisture content of from 15 to 25%, for example.

The high melting fat may be heated to a temperature above its melting point in order to be in liquid form.

The emulsifier may be heated to a temperature above its melting point in order to be in liquid form.

Preparing the premix may be carried out by means of any suitable traditional powder mixer such as a horizontal mixer with plow-shaped heads arranged on its horizontal shaft or a ribbon mixer, for example.

Forming the premix into granules or agglomerates by continuously dispersing the liquids into a flow of the premix may be carried out by means of one or more injection nozzles provided for injecting the liquids into a flow of the premix, and by means of an agitator provided for creating a highly turbulent flow of premix within a mixing space or chamber into which the liquids are injected, for example.

The injection nozzles may comprise a cylindrical conduct having a circular opening positioned beneath or within the flow of premix, for example.

The agitator may comprise agitating means such as paddles or knifes arranged around a rotating shaft capable of high rotation speed of from about 800 to 3000 rotation per min (rpm), for example.

The liquids may be injected into the flow of premix separately, or after having been intimately and continuously mixed together beforehand by passing through a static mixer, for example.

A continuous high speed ring layer granulator may be used for forming the premix with the liquids into granules, for example. Such granulator consists of a rotating agitator and a cylindrical housing. The agitator comprises a large number of flat paddles with adjustable pitch arranged around a horizontal rotating shaft, which sweep close to the inner surface of the housing.

A flow of premix introduced at ambient temperature into the granulator may be formed into a rather thin ring layer of from about 2 to 10 mm in thickness, flowing close to the inner surface of the housing, for example. The liquids may be injected into the thin ring layer at a temperature of from 45 to 70°C, through injection nozzles having their injection openings positioned beneath or even within the layer, for example. High paddle or rotor speed, preferably a speed of from 800 to 3000 rpm, may create a high turbulence in the thin ring layer, continuously exposing new particle surfaces to the liquid for a rather short residence time of from about 2 to 10 s influenced by the rotor speed and the pitch of the paddles, for example.

A vertical agglomerator may be used for forming the premix with the liquids into agglomerates, for example. Such agglomerator consists of a vertical agitator with mixing knifes arranged around a vertical shaft which rotates within a mixing chamber defined by a flexible rubber tube.

In such agglomerator the powdered premix passes through the mixing chamber in a downward flow and the mixing knifes may cause severe turbulences by rotating at a high speed of from 800 to 3000 rpm, for example. The liquids may be injected at the top of the mixing chamber through binary nozzles downwards into the flow of premix. The injected liquids and the powdered premix move down the mixing chamber in a spiral path for a residence time which is influenced by the angle and speed of the mixing knifes and which may be of from 2 to 10 s, for example.

Embodiments of the granular baking improver product and of the process for producing it according to the present invention are illustrated in the following Examples in which the percentages are by weight unless indicated to the contrary.

The Examples are preceded by a short description of methods used for defining some of the properties of the granular baking improver product thus obtained.

### Method 1: Particle size analysis

The particle size of the granular product was measured by means of a laser diffraction particle sizer (MASTERSIZER S, Malvern Instruments Ltd., Malvern/GB), coupled with a fully automated, air pressure controlled dry powder feeder (GMP ultra).

The result from the analysis was the relative distribution of volume of the particles in the range of size classes. Cumulative undersize curves and the following particle size distribution parameters were derived from these basic results:
**D50:** 50% limit = mean particle diameter (50% by volume of the particles had a diameter below D50 and 50% by volume of the particles had a diameter above D50).
**D01:** 1% limit (1% by volume of the particles had a diameter below D01)
**D10:** 10% limit (10% by volume of the particles had a diameter below D10)
**D90:** 90% limit (90% by volume of the particles had a diameter below D90)
**Span:** (D90-D10)/D50

### Method 2: Flowability

**W:** angle of repose (°)
**cot:** cotangent to angle of repose (-)

### Method 3: Compactation test

A standardised product sample (present granular product or comparative powdered product) in tablet form (49x29x24 mm) was compacted by a uniaxial solidifying tension force. The applied compactation force of 16870 N corresponds to the surface pressure of 1200 kg / Palette of 80x120 cm and hence simulated actual storage conditions for bread improver.

The increase in bulk density within the compacted sample and the penetration depth of the piston in the product tablet were used for appreciating flowing properties, that means the flow behaviour deteriorates by increasing penetration depth or density.

### Method 4: Compression strength test

The compacted product tablets (see Method 3) were exposed to a vertical crushing stress. A timely increasing crushing tension leads to tablet breaking, thereby indicating a "resistance to rupture" or "liquid-flow" limit of the tension leads to tablet breaking, thereby indicating a "resistance to rupture" or "liquid-flow" limit of the compacted product. The maximum force at breaking was recorded.

The lower the crushing tension required for breaking the tablet, the better the flowing properties of the bulk material.

### Comparisons

A powdered baking improver product available on the German market was used for comparing properties of the present granular product with corresponding properties of an existing powdered product.

### Example 1

A granular baking improver product was produced by means of an equipment comprising a RMG 30 type RUBERG continuous high speed ring layer granulator.

To this end a powdered premix was prepared in a horizontal mixer with plow-shaped heads arranged on its horizontal shaft, which had the following composition, in % of the total weight of premix plus liquids:

| | |
|---|---|
| Crystal sugar (sucrose) | 17.95 |
| Emusifier E 471 | 1.80 |
| Soya flour | 4.90 |
| Guar gum | 17.00 |
| Ascorbic acid | 0.20 |
| Enzyme mix | 2.50 |
| Acidic calcium pyrophosphate | 2.10 |
| Dextrose | 7.30 |
| Wheat flour | 18.55 |

The premix had a water content of 3.2%.

9.05% of a liquid malt extract (water content 21.4%; malt content 100% on dry matter) and 10.5% of an emulsifier (mono- and diacetyl tartaric acid ester) were heated to 50°C and intimately mixed by passing through a static mixer.

The powdered premix was passed through the granulator at a flow rate of about 600 kg/h. The rotor speed was of about 2400 rpm, the thickness of the ring layer was of about 3 to 4 mm and the residence time was of about 5 s.

Simultaneously the liquids were injected into the ring layer of powdered premix through an injecting nozzle positioned near the entry of powder premix into the granulator.

The granular baking improver product thus produced was collected at the outlet of the granulator, cooled down to ambient temperature and packaged into plastic bags. It had the properties indicated in table 1 hereafter:

**Table 1**

| Parameter | Granular product Example 1 | Comparison (powdered product) |
|---|---|---|
| D01 (µm) | 60 | 7 |
| D10 (µm) | 128 | 20 |
| D50 (µm) | 356 | 98 |
| D90 (µm) | 979 | 1199 |
| Span (-) | 2.39 | 12.03 |
| Compactation depth (mm) | 0.53 | 0.72 |
| Breaking force (N) | 3.4 | 5.3 |
| Flowability W (°) | 41.3 | 52.4 |
| Flowability cot (-) | 1.14 | 0.77 |

Table 1 illustrates clearly the fact that the particle size distribution of the present granular product is much better defined than the one of the known powdered product and that, contrarily to the known powdered product, the present product is not dusting (D01 of 60 µm as compared with 7 µm), it offers a relatively good resistance to compactation, it is relatively easy to be broken after compactation and it has a good flowability (cot value of 1.14 as compared with 0.77, taking the fact into consideration that the flowability may be considered to be good as soon as the cot value is at least 1.0).

### Example 2

A granular baking improver product was produced by means of an equipment comprising a Flexomix type SHUGI agglomerator.

To this end a powdered premix was prepared in a horizontal mixer with plow-shaped heads arranged on its horizontal shaft, which had the following composition, in % of the total weight of premix plus liquids (without added tap water):

| | |
|---|---|
| Ground sugar (sucrose) | 42.00 |
| Emusifier E 471 | 3.60 |
| Soya flour | 4.35 |
| Guar gum | 16.10 |
| Ascorbic acid | 0.18 |
| Enzyme mix | 2.80 |
| Wheat flour | 7.97 |
| Fat/Lecithin | 2.50 |

12.0% of a liquid malt extract (water content 21.4%; malt content 100% on dry matter), 8.5% of an emulsifier (mono- and diacetyl tartaric acid ester) and tap water (about 20% by weight of the total liquid mixture) were mixed in a tank and heated to about 50°C.

The powdered premix was passed downwardly through the agglomerator at a flow rate of about 450 kg/h, the residence time being of about 3 s. The shaft rotating speed was of about 3000 rpm.

Simultaneously the liquid mixture was injected or sprayed downwardly into the flow of powdered premix into the mixing chamber through binary injecting or spraying nozzles positioned on the top of the mixing chamber.

The granular baking improver product thus produced was collected at the bottom of the agglomerator, fluid bed dried to a residual water content of about 6%, cooled down to ambient temperature and packaged into plastic bags. It had the properties indicated in table 2 hereafter:

**Table 2**

| Parameter | Granular product Example 1 | Granular product Example 2 | Comparison (powdered product) |
|---|---|---|---|
| D01 (µm) | 60 | 80 | 7 |
| D10 (µm) | 128 | 187 | 20 |
| D50 (µm) | 356 | 450 | 98 |
| D90 (µm) | 979 | 1031 | 1199 |
| Span (-) | 2.39 | 1.88 | 12.03 |
| Compactation depth (mm) | 0.53 | 0.3 | 0.72 |
| Breaking force (N) | 3.4 | 0.8 | 5.3 |
| Flowability W (°) | 41.3 | 39.4 | 52.4 |
| Flowability cot (-) | 1.14 | 1.22 | 0.77 |

Table 2 illustrates the fact that the particle size distribution of the present granular product obtained in Example 2 is also much better defined than the one of the known powdered product and that, contrarily to the known powdered product, the present product obtained in Example 2 is not dusting (D01 of 80 µm as compared with 7 µm), it offers a relatively good resistance to compactation, it is relatively easy to be broken after compactation and it has a good flowability (cot value of 1.22 as compared with 0.77, taking the fact into consideration that the flowability may be considered to be good as soon as the cot value is at least 1.0).

## Claims

1. A granular baking improver product, which has a mean particle diameter of from 300 to 500 µm, less than 1% by volume of the particles having a diameter smaller than 50 µm, which comprises, in % by weight, from 8 to 20% of malt extract and/or high melting fat, from 8 to 20% of emulsifier, from 15 to 25% of stabiliser, from 45 to 69% of filler, up to 4% of enzyme mix, up to 0.5% acid and up to 0.5% of oxidising agent, and which has a moisture content of from 4 to 6%.

2. A granular baking improver product according to claim 1, in which at least 90% by volume of the particles have a diameter of 100 µm or more and the particles have a span in diameter distribution of from 1.5 to 2.5.

3. A process for the production of a granular baking improver product, which consists of preparing a premix of powdered constituents comprising, in % by total weight of premix plus liquids, from 15 to 25% of stabiliser, from 45 to 69% of filler, up to 4% of enzyme mix, up to 0.5% acid and up to 0.5% of oxidising agent, and forming the premix into granules or agglomerates by continuously dispersing liquids comprising from 8 to 20% liquid malt extract and/or high melting fat, from 8 to 20% of liquid emulsifier and up to 5% lactic acid into a flow of the premix.

4. A process according to claim 3, in which the premix is formed into granules within a continuous high speed ring layer granulator consisting of a rotating agitator and a cylindrical housing.

5. A process according to claim 4, in which the agitator rotates at a speed of from 800 to 3000 rpm.

6. A process according to claim 4, in which the liquids are mixed together beforehand by passing through a static mixer.

7. A process according to claim 4, in which the liquids are injected within a thin layer of premix flow having a thickness of from 2 to 10 mm, through one or more nozzles having injection openings positioned within the thin layer of premix flow.

## Patentansprüche

1. Gekörnte Backhilfe, welche einen durchschnittlichen Teilchendurchmesser von 300 bis 500 µm besitzt, wobei weniger als 1 Vol.-% der Teilchen einen Durchmesser unter 50 µm haben, umfassend, in Gew.-%, 8 bis 20 % Malzextrakt und/oder hochschmelzendes Fett, 8 bis 20 % Emulgator, 15 bis 25 % Stabilisator, 45 bis 69 % Füllstoff, bis zu 4 % Enzymmischung, bis zu 0,5 % Säure und bis zu 0,5 % Oxidationsmittel, und welche einen Feuchtigkeitsgehalt von 4 bis 6 % aufweist.

2. Gekörnte Backhilfe nach Anspruch 1, worin wenigstens 90 Vol.-% der Teilchen einen Durchmesser von 100 µm oder mehr haben und die Teilchen eine Variationsbreite in der Durchmesserverteilung von 1,5 bis 2,5 aufweisen.

3. Verfahren zur Herstellung einer gekörnten Backhilfe, bestehend aus
Herstellen einer Vormischung aus pulverisierten Bestandteilen, umfassend, in Prozent, bezogen auf das Gesamtgewichts der Vormischung plus Flüssigkeiten, 15 bis 25 % Stabilisator, 45 bis 69 % Füllstoff, bis zu 4 % Enzymmischung, bis zu 0,5 % Säure und bis zu 0,5 % Oxidationsmittel, und
Formen der Vormischung zu Körnchen oder Agglomeraten durch kontinulierliches Dispergieren von Flüssigkeiten, die 8 bis 20 % flüssiges Malzextrakt und/oder hochschmelzendes Fett, 8 bis 20 % flüssigen Emulgator und bis zu 5 % Milchsäure enthalten, in einen Strom der Vormischung.

4. Verfahren nach Anspruch 3, worin die Vormischung in einem kontinuierlich arbeitendem Hochgeschwindigkeits-Ringschicht-Granulator, der aus einem kreisenden Rührer und einem zylindrischen Gehäuse besteht, zu Körnchen geformt wird.

5. Verfahren nach Anspruch 4, worin der Rührer mit einer Geschwindigkeit von 800 bis 3.000 Upm kreist.

6. Verfahren nach Anspruch 4, worin die Flüssigkeiten vor dem Durchleiten durch einen statischen Mischer miteinander vermischt werden.

7. Verfahren nach Anspruch 4, worin die Flüssigkeiten in eine dünne Schicht des Vormischungsstroms mit einer Dicke von 2 bis 10 mm durch ein oder mehrere Düsen mit Injektionsöffnungen, die innerhalb der dünnen Schicht des Vormischungsstroms angeordnet sind, injiziert werden.

## Revendications

1. Améliorant de cuisson granulaire, dont le diamètre moyen de particule est compris entre 300 et 500 µm, moins de 1% en volume des particules ayant un diamètre inférieur à 50 µm, qui comprend, en % en poids, entre 8 et 20% d'extrait de malt et/ou de graisse à point de fusion élevé, entre 8 et 20% d'émulsifiant, entre 15 et 25% de stabilisant, entre 45 et 69% de charge, jusqu'à 4% de mélange d'enzymes, jusqu'à 0,5% d'acide et jusqu'à 0,5% d'agent oxydant, et dont la teneur en humidité est comprise entre 4 et 6%.

2. Améliorant de cuisson selon la revendication 1, dans lequel au moins 90% en volume des particules ont un diamètre de 100 µm et plus et dans lequel la distribution du diamètre des particules est dans la plage de 1,5 à 2,5.

3. Procédé de production d'un améliorant de cuisson granulaire qui comprend les étapes consistant à préparer un pré-mélange de constituants en poudre comprenant, en % du poids total du pré-mélange plus des liquides, entre 15 et 25% de stabilisant, entre 45 et 69% de charge, jusqu'à 4% de mélange d'enzymes, jusqu'à 0,5% d'acide et jusqu'à 0,5% d'agent oxydant, et à conformer le pré-mélange en granules ou en agglomérats en dispersant en continu dès liquides comprenant entre 8 et 20% d'extrait de malt liquide et/ou de graisse à point de fusion élevé, entre 8 et 20% d'émulsifiant liquide et jusqu'à 5% d'acide lactique pour donner un pré-mélange fluide.

4. Procédé selon la revendication 3, dans lequel le pré-mélange est conformé en granules dans un granulateur continu en couches annulaires à grande vitesse se composant d'un agitateur rotatif et d'un carter cylindrique.

5. Procédé selon la revendication 4, dans lequel l'agitateur tourne à une vitesse comprise entre 800 et 3000 tours par minute.

6. Procédé selon la revendication 4, dans lequel les liquides sont mélangés ensemble avant de passer par un mélangeur statique.

7. Procédé selon la revendication 4, dans lequel les liquides sont injectés dans une mince couche de pré-mélange fluide dont l'épaisseur est comprise entre 2 et 10 mm, par une ou plusieurs buses comportant des ouvertures d'injection placées à l'intérieur de la mince couche de pré-mélange fluide.
